# EUROPEAN PATENT APPLICATION

(11) **EP 2 003 628 A1**
(43) Date of publication of application: **17.12.2008**
(21) Application number: 07024686.3
(22) Date of filing: 20.12.2007
(51) Int. Cl.: G07F 13/06, A47J 31/40

(54) **Mixing device particularly for beverage vending machines**

(30) Priority: 15.06.2007 IT mi20071207
(71) Applicant: Bianchi Vending Group S.P.A., 24049 Zingonia Di Verdellino (BG) (IT)
(72) Inventor: Vergani, Tarcisio, 24040 Boltiere (Bergamo) (IT)
(74) Representative: Forattini, Amelia

(57) **Abstract**

A mixing device, particularly for beverage vending machines, characterized in that it includes a transducer or sonotrode, which converts electric power, generated by an electronic control board, into mechanical energy, transferring it to a vessel which contains the product to be mixed. The device is capable of amalgamating substances in liquid and powder form in any vessel for food products without making contact therewith.

## Description

The present invention relates to a mixing device particularly for beverage vending machines.

Vending machines for hot soluble beverages are generally constituted by six different sections, which are indispensable for the correct operation of the machine.

A conventional vending machine in fact has a water intake section, which includes an electric valve and a tray, known as air break.

A second section includes a system for dispensing the stir-sticks and a system for dispensing the cups.

A third section includes a boiler body, a heating member, temperature probes, level probes and electric dispensing valves, normally one electric valve for each mixing chamber provided in the vending machine.

A fourth section includes a container for each soluble powder, the corresponding motor for dispensing the powder, and a tube for conveying the powder into the mixer.

A fifth section includes a mixing motor and the corresponding impeller and mixing chamber.

A sixth dispensing section includes a support for nozzles, one for each mixing chamber provided in the vending machine, for conveying the mixed beverage into the cup.

When the machine dispenses cold beverages, the cycle for dispensing cold soluble beverages differs from the one described above only in the source of the water. The water in fact does not arrive from the boiler but arrives from a compressor cooling system arranged on the bottom of the vending machine.

The fifth mixing section has some important problems which are not solved adequately in traditional vending machines.

A first drawback of the mixing section is that the temperature of the beverage decreases considerably due to the length of the tubes and to the time spent in the mixing chamber.

Another problem is that the mixing of the sugar that is present in soluble powders is not ensured, because the motors and the corresponding impellers used in traditional machines have a limited performance.

Another drawback is that the quality of the product in a cup is not constant because of the mixing and heating tolerances.

Another important drawback is that mixing occurs directly below the powder containers and the steam generated by the hot water causes the deposition of product on the conveyance tubes and on the mixing cup.

Over time, those deposits become encrusted and can impair the functionality of the vending machine, forcing the operator to perform technical intervention on site.

Another drawback is that the mixing cups and the corresponding actuators must be constantly washed in order to ensure maximum hygiene to the end user, as also required by the law.

If the operator does not sanitize the internal parts, there is no assurance that the beverage passes through a hydraulic circuit which is not contaminated by bacteria.

Again in relation to hygiene, in vending machines provided with a mixing section of the traditional type, the product comes into contact with metallic actuators and plastic parts which are subject to erosion, causing the migration into the water of heavy metals and of colors which are harmful to the health.

The aim of the present invention is to provide a mixing system for beverage vending machines which overcomes the drawbacks of the cited prior art.

An object of the invention is to provide a system which is capable of mixing substances in the form of a liquid and in powder form in any vessel for food products.

Another object of the invention is to provide a device which is capable of mixing food powders in a liquid, or two liquid products with different specific gravity, also ensuring their maximum hygiene.

Another object is to provide a device which allows to facilitate and drastically reduce the sanitizing operations of the vending machine to which it is applied.

This aim and these and other objects which will become better apparent hereinafter are achieved by a mixing device, particularly for beverage vending machines, characterized in that it comprises a transducer or sonotrode, which converts electric power, generated by an electronic control board, into mechanical energy, transferring it to a vessel which contains the product to be mixed.

Further characteristics and advantages will become better apparent from the following detailed description of preferred but not exclusive embodiments of the invention, illustrated by way of non-limiting example in the accompanying drawings, wherein:

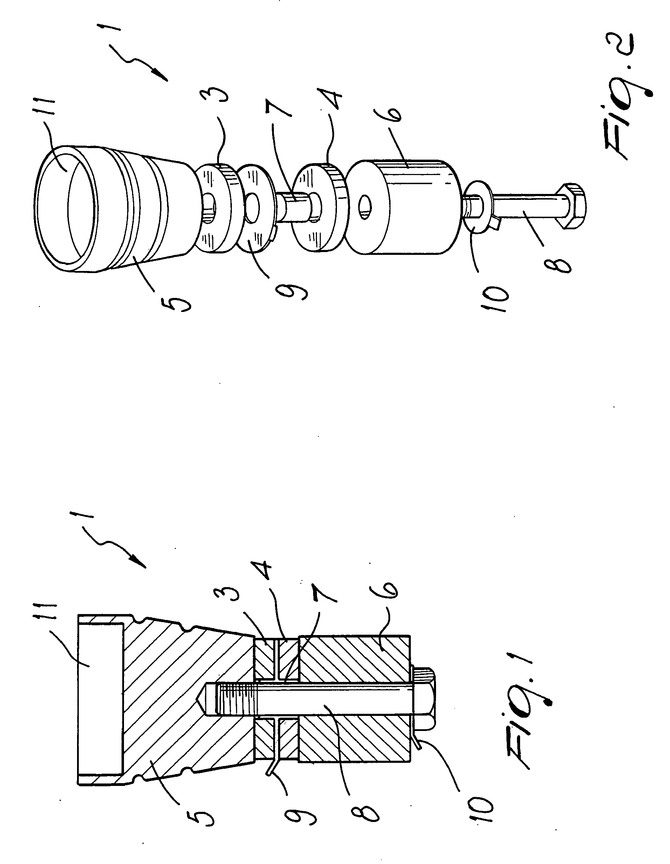

Figure 1 is a longitudinally sectioned side view of the mixing device according to the present invention;
Figure 2 is an exploded perspective view of the device;
Figure 3 is a diagram showing the waveform generated by the device;
Figure 4 is a schematic view of the cavitation process;

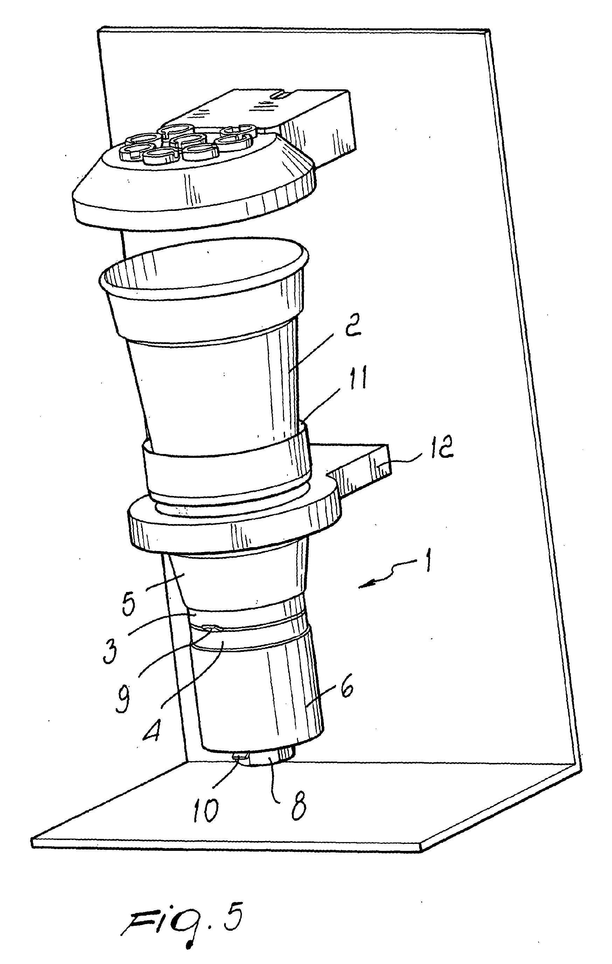

Figure 5 is a perspective view which schematically illustrates the use of the device according to the invention to mix a beverage in a cup in a vending machine.

With reference to the cited figures, a device according to the invention, generally designated by the reference numeral 1, comprises a transducer or sonotrode, which converts the electric power generated by an electronic board into mechanical energy, transferring it to the vessel 2 which contains the product to be mixed.

The sonotrode is constituted by two piezoelectric members, which are constituted by PZT rings, respectively designated by the reference numerals 3 and 4. The PZT rings are associated with an upper head 5 and with a cylindrical body 6 by means of a bush 7 and a screw 8.

An upper copper electrode 9 is interposed between the two piezoelectric members 3 and 4 and a second copper electrode 10 is arranged below the cylindrical body 6.

Preferably, the upper head 5 is made of Al 2011, with a tolerance of ± 0.05 and a roughness of 3.2.

Preferably, the cylindrical body 6 is made of AISI 303 steel and the bush 7 is constituted by a PVC cylinder.

The screw 8 is, in the specific case, of the TE M10x60 type.

In order to achieve the optimum mixing results required by the application, the PZT rings 3 and 4 are made of materials which are mixed in different percentages, sintered and polarized at high temperature.

An important feature of the material is the Curie point: for this application, it should exceed 150 °C.

Two silver electrodes are provided by means of a metalization process on the flat surfaces of the PZT rings 3 and 4.

When an electric voltage is applied to the electrodes, the material expands or compresses depending on the orientation of the voltage with respect to the polarization of the PZT rings.

The choice of the mixture of ceramic material and the geometry of the transducer allow to facilitate vibration in a privileged direction and most of all determine the resonance frequency (*f*₀) of the transducer.

*f*₀ is the fundamental frequency of the waveform generated by the driver board.

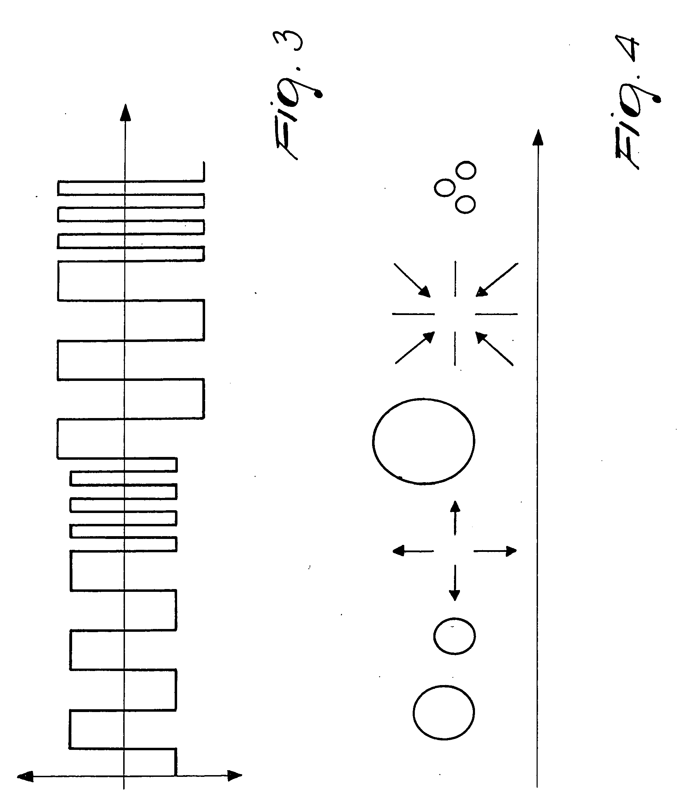

To achieve uniform mixing, the electronic control includes a system which is capable of providing the sonotrode with a multifrequency multi-power waveform, of the type shown in Figure 3, which allows to activate known thermomechanical phenomena within the liquid.

Emitting this ultrasound wave inside the liquid creates alternately compressed and expanded regions, i.e., a cavitation process, shown schematically in Figure 4, which allows to mix the products and to ensure uniformity in the beverage.

This mixing process using cavitation also allows to prevent residues on the bottom of the vessel and, if allowed by the product, to have a layer of cream according to the specifications of the vending sector, such as for example milk.

The wave generated by the device determines the number of microcavities and the corresponding implosion rate.

When this wave is sufficiently intense, it generates, in the expanded regions, a local pressure which is lower than the ambient pressure, which produces microcavities with a diameter which can reach 100 micrometers.

When the pressure becomes positive again, these cavities implode in less than 1 microsecond, locally inducing a temperature of several thousand degrees and a pressure wave equal to several thousand times the atmospheric pressure.

The cavitation phenomenon allows to mix a food powder in a liquid, for example instant coffee and water, or two liquids contained in the same vessel with different specific gravities, for example mint syrup and water.

The temperature of the mixture also tends to increase in proportion to the number of cavities that implode inside the liquid.

The temperature variation is perceivable only with adequate instruments, but in the specific case it is sufficient to ensure that the temperature of the dispensed water is maintained, avoiding the thermal loss which, in the dispensing cycle of a traditional vending machine, is caused by the length of the tubes and by the large plastic section in contact with the mixed liquid.

To allow acoustic cavitation to occur, it is necessary to reach a very specific power threshold.

This threshold is on the order of 0.5 W/cm² (surface of the vibrating source) at 20 kHz for water.

The presence of food powder particles or of liquids having a different specific gravity creates heterogeneous situations which form regions of disorganization of the liquid locus, facilitating the formation of cavitation bubbles.

The multifrequency wave allows to considerably reduce the mixing times with respect to a system using a single frequency (*f*₀) and furthermore increases the distribution of ultrasound cavitation, facilitating this phenomenon in liquids which otherwise would cavitate with great difficulty.

The multifrequency wave is provided by sequentially generating waves in a very specific order, with a fundamental frequency *f*₀ and waves at frequencies which are harmonics of *f*₀.

The combination of the factors described above ensures the obtainment of uniform mixing which complies with the requirements of the sector.

The parameters of the multifrequency wave can be programmed by a specialized technician so as to make the system flexible.

It is possible to customize the waveform to ensure compatibility with products which cavitate too easily or with great difficulty.

Also the shape of the sonotrode can be customized depending on the vessel that one wishes to use.

In the illustrated example, the sonotrode is provided with an upper head 5, which includes an upper seat 11 which is suitable to accommodate a plastic cup 2, of the type normally used in vending machines to dispense beverages.

The complete apparatus, constituted by the sonotrode 1, by the electronic system and by the support 12, is integrated within a hot and cold beverage vending machine of a per se known type.

The dispensing cycle of the vending machine provided with the device according to the present invention is as follows.

The feeder device (cup dispenser) dispenses the cup, which is moved below the powder containers, where the amount of powder for producing the beverage required by the user is dispensed.

In a second station, the cup is introduced in the sonotrode, within the seat 11, and part of the hot water is dispensed.

After at least half the dose of water required to produce the beverage, the sonotrode is activated.

At the end of mixing, the cup is presented to the end user.

The device according to the present invention, inserted in a vending machine, can be used in two particular applications.

In so-called mixerless vending machines, the sonotrode is provided and sized so as to ensure complete mixing of powders in a liquid or of two liquids having a different specific gravity.

In vending machines of the standard type, mixing is in any case entrusted to standard mixing devices and the device according to the present invention must ensure only and exclusively that no sugar residues remain on the bottom of the cup.

This use of the sonotrode allows to eliminate the stir-stick dispenser accessory, i.e., the device which provides the stir-sticks for mixing the beverage.

In practice it has been found that the invention achieves the intended aim and objects, a mixing device having been provided which is particularly advanced in the field of automatic mixing of hot and cold beverages derived from the use of food products in powder or liquid form.

The device according to the present invention ensures complete compatibility with all the world's health standards.

The mixing device according to the present invention allows to achieve excellent results in a cup and to ensure that the beverage is produced directly inside the vessel/cup from which the user can enjoy it.

Another advantage of the device according to the present invention is that it allows the product to be mixed completely without residues on the bottom of the vessel and therefore to avoid the use of the stir-stick by the user, eliminating the mechanical device for dispensing the stir-stick which is currently present in all vending machines.

The lack of the stir-stick dispenser also allows to reduce vandalism affecting the payment system, which is common to all the sector.

The mixing device according to the present invention constitutes a fundamental step for protecting vending machines, for the quality of the dispensed product and for the image of vending in the eyes of the end user.

This application claims the priority of Italian Patent Application No. MI2007A001207, filed on 15 June 2007, the subject matter of which is incorporated herein by reference.

The mixing device particularly for beverage vending machines according to the invention is susceptible of numerous modifications and variations, within the scope of the appended claims.

The materials used, as well as the dimensions, may be any according to the requirements and the state of the art.

## Claims

1. A mixing device, particularly for beverage vending machines, **characterized in that** it comprises a transducer or sonotrode, which converts electric power, generated by an electronic control board, into mechanical energy, transferring it to a vessel which contains the product to be mixed.

2. The device according to claim 1, **characterized in that** said sonotrode is constituted by two piezoelectric members, constituted by PZT rings, which are associated with an upper head and a cylindrical body, by means of a bush and a screw; an upper copper electrode being interposed between said piezoelectric members, and a second copper electrode being arranged below said cylindrical body.

3. The device according to claims 1 or 2, **characterized in that** said upper head is made of Al 2011, with a tolerance of ± 0.05 and a roughness of 3.2.

4. The device according to one or more of the preceding claims, **characterized in that** said cylindrical body is made of AISI steel and said bush is constituted by a PVC cylinder.

5. The device according to one or more of the preceding claims, **characterized in that** said PZT rings are made of materials which are mixed in different percentages, sintered and polarized at high temperature.

6. The device according to one or more of the preceding claims, **characterized in that** the Curie point is higher than 150 °C.

7. The device according to one or more of the preceding claims, **characterized in that** two silver electrodes are provided on the flat surfaces of said PZT rings by means of a metalization process.

8. The device according to one or more of the preceding claims, **characterized in that** said electronic control board provides said sonotrode with a multifrequency multi-power waveform.

9. The device according to one or more of the preceding claims, **characterized in that** said multifrequency wave is generated by generating sequentially, in a specific order, waves at a fundamental frequency *f*₀ and waves at frequencies which are harmonics of *f*₀.

10. The device according to one or more of the preceding claims, **characterized in that** the parameters of said multifrequency wave can be programmed so as to make the system flexible as a function of the ease or difficulty with which the various products cavitate.

11. The device according to one or more of the preceding claims, **characterized in that** said upper head of said sonotrode comprises a seat for a container or vessel inside which mixing is performed.
